# EUROPEAN PATENT SPECIFICATION

(11) **EP 2 260 726 B1**
(45) Date of publication and mention of the grant of the patent: **19.11.2014**
(21) Application number: 10182043.9
(22) Date of filing: 21.08.2006
(51) Int. Cl.: A23L 1/317, A22C 11/00, A22C 13/00, A23L 1/00

(54) **Method and device for subjecting co-extruded food products to an airflow in two phases**
Verfahren und Einrichtung, um gemeinsam extrudierte Nahrungsmittelprodukte einem Luftstrom in zwei Phasen zu unterwerfen
Procédé et dispositif pour soumettre des produits alimentaires coextrudés à un flux d'air en deux phases

(30) Priority: 12.09.2005 NL 1029931
(43) Date of publication of application: 15.12.2010
(62) Divisional of application: 06783951.4
(73) Proprietor: Stork Townsend B.V., 5349 AE Oss (NL)
(72) Inventor: Bontjer, Marcus Bernhard Hubert, 5735 CS Aarle-Rixtel (NL); Meggelaars, Sigebertus Johannes Jacobus Jozef, 5643 PM Eindhoven (NL); Thoonsen, Paulus Johanus Maria, 5261 AD Vught (NL); Van den Berg, Kasper Willem, 5345 ZP Oss (NL)
(74) Representative: Van den Heuvel, Henricus Theodorus

(56) References cited:
- WO-A-95/28090
- WO-A-99/55165
- US-B1- 6 419 968

## Description

The present invention relates to a method for manufacturing co-extruded food products, comprising the processing steps of: A) co-extruding an elongate dough strand and a casing enclosing the elongate dough strand to form a non-coagulated food product, B) bringing the casing into contact with a salt solution, and C) dividing the encased elongate food strand into individual products, whereafter the co-extruded food products are subjected to an airflow. The invention also relates to a device for manufacturing co-extruded food products, comprising: co-extrusion means for simultaneously manufacturing an elongate dough strand and a casing enclosing the elongate dough strand, supply means for supplying a salt solution to the co-extruded food product, separating means for dividing the encased elongate food product into individual products, and drying means provided with a means for generating an airflow disposed in a drying space.

In the co-extrusion of food products dough is extruded from a nozzle such that an elongate dough strand is formed. Simultaneously with the extrusion of the dough strand a skin (casing) is arranged, likewise by means of the extrusion, around the dough strand of a material suitable for this purpose, usually a collagen mixture or an alginate mixture. Food products (in particular sausages) are thus manufactured by means of the simultaneous extrusion (co-extrusion). The food products usually consist of meat products, but it is also possible to manufacture vegetarian products with a non-animal casing in this manner. The material with which the casing is manufactured is viscous immediately after arranging thereof around the dough strand. In order to give the casing some strength so that subsequent treatment and process steps are possible, it is desirable to extract water from the casing as quickly as possible such that it obtains a mechanical strength. For this purpose the casing is usually brought into contact with a salt solution immediately after extrusion so as to have the casing acquire a stronger structure; such a process of strengthening the casing can for instance consist of precipitation, "crosslinking" and/or gelling (this latter process takes place particularly in the case of an alginate mixture). Following the first strengthening process, the extrusion product can be divided up ("brought to length") by a separator, for instance a crimper or a linker. After separation the divided extrusion products are usually placed in a drying space where the casing is stabilized further by means of drying. After drying, the products can be taken out of the drying space and, in the case of preparation of smoked food products, brought into contact with a smoke extract or natural smoke. It can occur that the thus smoked food products are then fed back again to the drying space for further stabilization of the products. Such a process is described inter alia in NL 1007039. The prior art drying means are very voluminous and consume much energy. This results in a normal duration of stay in the drying means of about 24 minutes for an extrusion product with a diameter of 24 mm, this at a temperature usually lying between 65°C and 90°C.

US 6 419 968 describes a method and apparatus for producing sausages, wherein sausage paste and collagen in coextruded to form a continuous sausage body. The body is separated into individual sausage links and transported to an enclosure where they are loaded into baskets wherein heat is supplied to cook the sausage links. Additionally, the links are treated with natural smoke.

WO 95/28090 describes a method and apparatus of continuously processing an elongated strand of plastic edible material coated with a coagulated coating. Thereto a co extruder provides strands which are conveyed through a brine fluid after which the strands are washed, air dried, portioned and surface dried.

The present invention has for its object to provide a simple method and device with which co-extruded food products can be dried in quicker and readily controllable manner relative to the prior art.

The invention provides for this purpose a method of the type stated in claim 1. Favourable results are achieved at an initial temperature of the airflow of at least 95°C. Depending on the other process conditions, it is even possible to dry at an initial temperature of the airflow of at least 100°C. The successive airflows herein define separate drying phases which can be controlled independently of each other. By thus separating the airflow treatments, or the drying process, into two sub-processes which can be controlled wholly independently, with successive phases characterized by separate airflows conditioned independently of each other, it is possible to further optimize the sub-processes. This must be seen as including improved control of process conditions such as temperature, air humidity, flow speed, distribution of airflow over the space and so forth. A more specific example of more readily controllable process conditions is the avoidable temperature drop between the successive airflow treatments. This has been found in preliminary practical tests to already result in a saving of 33% in the total time duration of the drying process (at a drying time according to the prior art of 24 minutes for extrusion products having a diameter of 24 mm) to a drying time of a total of 16 minutes according to the present invention (wherein 10 minutes of first drying and 6 minutes of second drying). That both processing steps are for instance drying steps, which are distinguished from heat treatment of the products such as for instance in a cooking treatment, is elucidated by specifying that the products are still not fully coagulated, even after passing through both processing steps.

At least one of the airflows has an at least substantially horizontal flow direction. The advantage of such a horizontal flow direction is that the extrusion products can thus also be displaced substantially horizontally in a counterflow direction. This measure also results in an improved controllability of the process conditions of the airflows. With a more vertical flow direction of an airflow, convection will for instance be able to have a greater (disruptive) effect on the process conditions. A horizontal airflow also makes it possible to give the associated equipment a more compact, i.e. less high, form. A limited height of the equipment has the advantage that this increases flexibility in respect of the deployment of the equipment.

Particularly when a casing of collagen is applied, it is desirable to maximize the initial temperature of the airflow during at least one of the successive drying phases at 125°C, preferably at a maximum of 115°C. The cause hereof is that the chemical stability of a collagen casing disappears when such a temperature is exceeded. If use is made of a casing of alginate, such a restriction of the temperature range does not however apply.

The food products not being completely coagulated after passing through each of the drying phases is understood to mean that the core temperature of the extrusion product remains below 60°C. At least such a temperature is required to cause the proteins of the extrusion product to coagulate. In other words: the dough strand is not yet heated such that it is fully cooked or boiled. To nevertheless allow the dough strand to coagulate, the co-extruded food products can be heated, after passing through the two successive drying phases, such that they are completely coagulated. Examples hereof are for instance: canning the products and then sterilizing the content thereof, heating the products after they are packed in a foil packaging; also referred to as "cook in pack", and cooking unpackaged extrusion products by means of steam in a so-called steam cooker.

In addition to air temperature, another important process condition is the air humidity. In respect of this variable it is desirable that at least one of the airflows has at the start of the drying process an air humidity of less than 25 grams of water per kilogram of air. Even better drying results can be achieved at an air humidity of less than 20 or 15 grams of water per kilogram of air. It is also advantageous when this is the case for both drying phases. Yet another advantageous process condition is that the average flow speed of at least one of the airflows is at least 3 m/s. Average flow speeds of more than 4 or 5 metre/second can also be applied in practice. At such higher average flow speeds a more rapid exchange takes place between the extrusion product and the airflow.

Another possibility provided by the present invention is that, owing to the separated drying phases, a treatment can be performed on the co-extruded food products between the two phases, for instance a liquid treatment such as a treatment of the food products with liquid smoke, aldehyde, a "cross-linker" and/or natural smoke.

The present invention also provides a device for manufacturing co-extruded food products according to claim 9, with the feature that the drying means comprise two mutually separated drying spaces, both provided with means which can be controlled independently of each other for generating airflows. The separate drying spaces and the respective means for generating airflows associated with the drying spaces are herein assembled to form two separate units. It is herein desirable that these units are each also provided with means for conditioning the air. For the advantages of such a device reference is made to the advantages already stated above in respect of the method according to the present invention. In addition, the division of the drying means into different separate units provides a number of advantages in the transport and construction of the drying means, and they can also be given a compact form such that fewer, or no, modifications are required in the architecture of the normal production areas.

In the device at least one of the drying spaces is provided with an at least substantially horizontal flow channel for the passage of the airflow. Such a device can be given a compact (low) form such that it can usually be accommodated in existing buildings without architectural modifications having to be made. Such relatively simple placing is particularly possible if the device has a maximum height of less than 4.5 metres.

The present invention will be further elucidated on the basis of the non-limitative exemplary embodiments shown in the following figures. Herein:
figure 1 shows a schematic perspective view of a co-extrusion device according to the present invention, and
figure 2 shows a schematic top view of an alternative embodiment variant of a co-extrusion device according to the present invention.

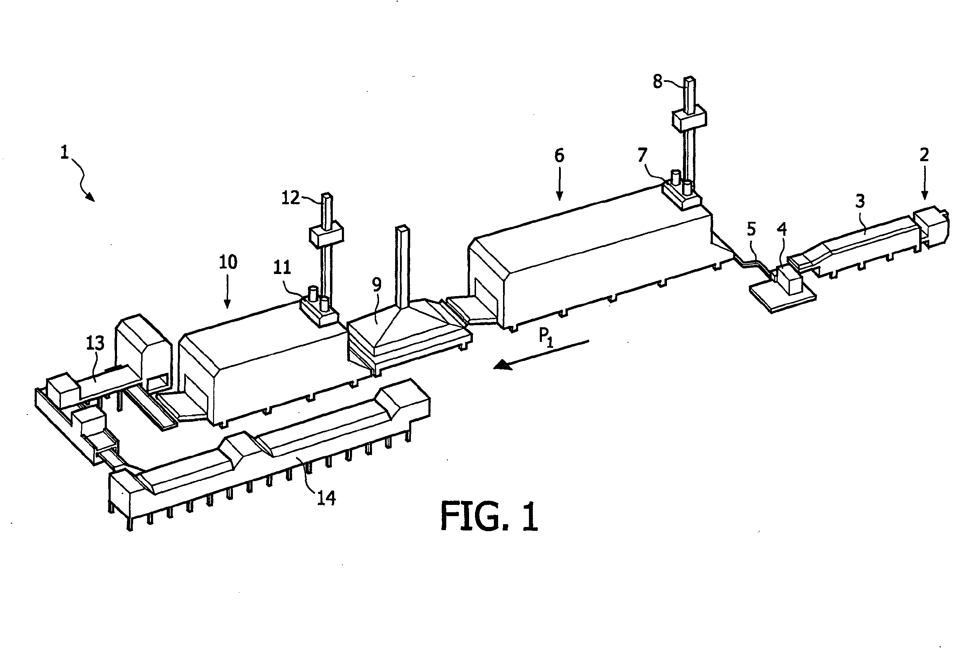

Figure 1 shows a co-extrusion device 1 according to the invention with a co-extrusion nozzle 2, a brining bath 3 (provided with a separating unit which is not shown), a transfer means 4 and a conveyor track 5 for singulated products. The product flow is as according to arrow P₁. In a first drying unit 6 the products are then dried using conditioning means 7, forming part of first drying unit 6, for air drawn in using an air feed 8. After passing through first drying unit 6, the products enter a smoking unit 9 where the products are treated with a liquid smoke extract. A second drying unit 10 is disposed connecting onto smoking unit 9. This second drying unit 10 is very similar to first drying unit 6 and is likewise provided with conditioning means 11 for air drawn in using air feed 12. It will be apparent that first drying unit 6 and second drying unit 10 are completely separated from each other, and that the drying processes in the two drying units 6, 10 need not influence each other in any way whatever. After passing through second drying unit 10, the dried products enter a packaging device 13 and subsequently undergo a further (heat) treatment in a heating line 14.

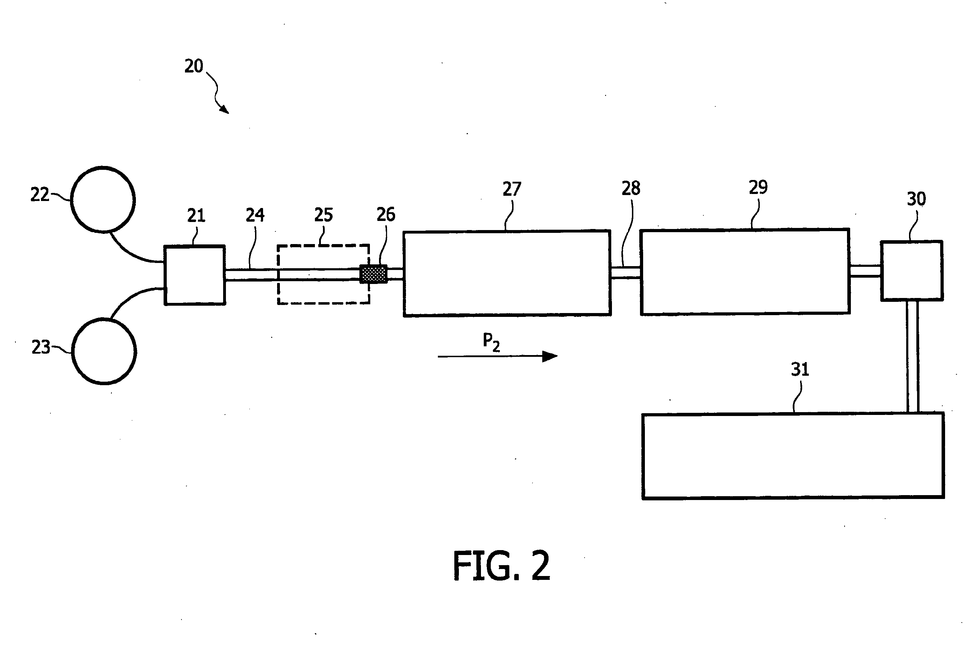

Figure 2 shows a co-extrusion device 20 according to the invention, in which food products are displaced as according to arrow P₂. A co-extrusion nozzle 21 is fed by a supply container 22 for meat dough and a supply container 23 for casing material. A co-extruded food strand is carried over a conveyor track 24 through a brining bath 25 and then separated by a crimper wheel 26. After being singulated, the products enter a first drying unit 27 which, via a conveyor track 28, is connected to a second drying unit 29 placed at a distance. After the products have also left second drying unit 29, they enter a packaging device 30 in order to undergo a finishing treatment in a processing line 31.

## Claims

1. Method for manufacturing co-extruded food products, comprising the processing steps of:
A) co-extruding an elongate dough strand and a casing enclosing the elongate dough strand to form a non-coagulated food product,
B) bringing the casing into contact with a salt solution, and
C) dividing the encased elongate food strand into individual products, and
subjecting the co-extruded food product to airflows of which successive airflows the process conditions are independently of each other controllable to define independent and separate drying phases,
wherein the food products are after dividing the encased elongate food strand into individual products subjected to two successive drying airflows physically separated from each other while the food products are still not fully coagulated after passing through the airflows,
**characterized in that** the initial temperature of the airflow during at least one of the successive drying phases being at least 95°C.

2. Method as claimed in claim 1, **characterised in that** the flow speed of at least one of the airflows is at least 3 m/s.

3. Method as claimed in any of the foregoing claims, **characterized in that** the initial temperature of the airflow during at least one of the successive phases is a maximum of 125°C, preferably a maximum of 115°C.

4. Method as claimed in any of the foregoing claims, **characterized in that** the core temperature of the dough strand is less than 60°C after passing through each of the drying phases.

5. Method as claimed in any of the foregoing claims, **characterized in that** at least one of the airflows consists of an airflow with an air humidity of less than 25 grams of water per kilogram of air.

6. Method as claimed in any of the foregoing claims, **characterized in that** a treatment is performed on the co-extruded food products between two successive drying phases.

7. Method as claimed in claim 6, **characterized in that** the treatment performed between two successive drying phases is a liquid treatment.

8. Method as claimed in any of the foregoing claims, **characterized in that** the co-extruded food products are heated after passing through the two successive drying phases such that they are fully coagulated.

9. Device (1, 20) for manufacturing co-extruded food products, comprising:
- co-extrusion means (2, 21, 22, 23) for simultaneously manufacturing an elongate dough strand and a casing enclosing the elongate dough strand,
- supply means (3, 25) for supplying a salt solution to the co-extruded food product,
- separating means (26) for dividing the encased elongate food product into individual products, and
- drying means (6, 10, 27, 29) provided with a means (7, 8; 11, 12) for generating an airflow disposed in a drying space (6, 10, 27, 29),
wherein the drying means (6, 10, 27, 29) located behind the separating means (26) comprise two mutually separated drying spaces, both provided with means (7, 8; 11, 12) which can be controlled independently of each other for generating independent airflows
**characterised in that** the drying means comprise an at least substantially horizontal flow channel for passage of the airflow and the drying means are able to generate an initial temperature of the airflow during at least one of the successive drying phases is at least 95°C.

10. Device (1, 20) as claimed in claim 9, **characterized in that** the separate drying spaces (6, 10, 27, 29) and the respective means (7, 8; 11, 12) for generating airflows associated with the drying spaces (6, 10, 27, 29) are assembled into two separate units (6, 10, 27, 29).

11. Device(1, 20) as claimed in claims 9 or 10, **characterized in that** the device (1, 20) has a maximum height which is less than 4.5 metres.

12. Device (1, 20) as claimed in any of the claims 9-11, **characterised in that** the means (7, 8; 11, 12) for generating an airflow in at least one of the drying spaces (6, 10, 27, 29) are adapted to generate an airflow of at least 3 m/s.

## Patentansprüche

1. Verfahren zum Herstellen koextrudierter Lebensmittelprodukte, das die folgenden Verarbeitungsschritte umfasst:
A) Koextrudieren eines langgestreckten Teig-strangs und einer Hülle, die den langgestreckten Teigstrang umschließt, um ein nichtkoaguliertes Lebensmittelprodukt zu bilden,
B) Herstellen eines Kontakts zwischen der Hülle und einer Salzlösung und
C) Aufteilen des umhüllten langgestreckten Lebensmittelstrangs in einzelne Produkte und Beaufschlagen des koextrudierten Lebensmittelprodukts mit Luftströmen, wobei die Prozessbedingungen von aufeinanderfolgenden Luftströmen unabhängig voneinander steuerbar sind, um unabhängige und getrennte Trocknungsphasen zu definieren,
wobei die Lebensmittelprodukte nach dem Aufteilen des umhüllten langgestreckten Lebensmittelstrangs in einzelne Produkte mit zwei aufeinanderfolgenden Trocknungsluftströmen beaufschlagt werden, die physisch voneinander getrennt sind, wobei die Lebensmittelprodukte immer noch nicht vollständig koaguliert sind, nachdem sie die Luftströme durchlaufen haben,
**dadurch gekennzeichnet, dass** die Anfangstemperatur des Luftstroms während mindestens einer der aufeinanderfolgenden Trocknungsphasen mindestens 95°C beträgt.

2. Verfahren nach Anspruch 1, **dadurch gekennzeichnet, dass** die Strömungsgeschwindigkeit von mindestens einem der Luftströme mindestens 3 m/s beträgt.

3. Verfahren nach einem der vorhergehenden Ansprüche, **dadurch gekennzeichnet, dass** die Anfangstemperatur des Luftstroms während mindestens einer der aufeinanderfolgenden Trocknungsphasen höchstens 125°C, vorzugsweise höchstens 115°C, beträgt.

4. Verfahren nach einem der vorhergehenden Ansprüche, **dadurch gekennzeichnet, dass** die Kemtemperatur des Teigstrangs nach Durchlaufen jeder der Trocknungsphasen weniger als 60°C beträgt.

5. Verfahren nach einem der vorhergehenden Ansprüche, **dadurch gekennzeichnet, dass** mindestens einer der Luftströme einen Luftstrom mit einer Luftfeuchtigkeit von weniger als 25 Gramm Wasser pro Kilogramm Luft umfasst.

6. Verfahren nach einem der vorhergehenden Ansprüche, **dadurch gekennzeichnet, dass** eine Behandlung der koextrudierten Lebensmittelprodukte zwischen zwei aufeinanderfolgenden Trocknungsphasen ausgeführt wird.

7. Verfahren nach Anspruch 6, **dadurch gekennzeichnet, dass** die Behandlung, die zwischen zwei aufeinanderfolgenden Trocknungsphasen ausgeführt wird, eine Flüssigkeitsbehandlung ist.

8. Verfahren nach einem der vorhergehenden Ansprüche, **dadurch gekennzeichnet, dass** die koextrudierten Lebensmittelprodukte nach Durchlaufen der zwei aufeinanderfolgenden Trocknungsphasen erhitzt werden, so dass sie vollständig koaguliert sind.

9. Vorrichtung (1, 20) zum Herstellen koextrudierter Lebensmittelprodukte, die Folgendes umfasst:
- Koextrusionsmittel (2, 21, 22, 23) zum gleichzeitigen Herstellen eines langgestreckten Teigstrangs und einer Hülle, die den langgestreckten Teigstrang umhüllt,
- Versorgungsmittel (3, 25) zum Bereitstellen einer Salzlösung für das koextrudierte Lebensmittelprodukt,
- Trennmittel (26) zum Aufteilen des umhüllten langgestreckten Lebensmittelprodukts in einzelne Produkte, und
- Trocknungsmittel (6, 10, 27, 29) mit Mitteln (7, 8; 11, 12) zum Erzeugen eines Luftstroms, der in einem Trocknungsraum (6, 10, 27, 29) angeordnet ist,
wobei die hinter den Trennmitteln (26) angeordneten Trocknungsmittel (6, 10, 27, 29) zwei voneinander getrennte Trocknungsräume umfassen, die beide über Mittel (7, 8; 11, 12) verfügen, die unabhängig voneinander steuerbar sind, um unabhängige Luftströme zu erzeugen,
**dadurch gekennzeichnet, dass** die Trocknungsmittel einen zumindest im Wesentlichen horizontalen Strömungskanal für den Durchtritt des Luftstroms umfassen und die Trocknungsmittel eine Anfangstemperatur des Luftstroms erzeugen können, die während mindestens einer der aufeinanderfolgenden Trocknungsphasen mindestens 95 °C beträgt.

10. Vorrichtung (1, 20) nach Anspruch 9, **dadurch gekennzeichnet, dass** die getrennten Trocknungsräume (6, 10, 27, 29) und die entsprechenden Mittel (7, 8; 11, 12) zum Erzeugen der Luftströme, die den Trocknungsräumen (6, 10, 27, 29) zugeordnet sind, in zwei getrennten Einheiten (6, 10, 27, 29) angeordnet sind.

11. Vorrichtung (1, 20) nach Anspruch 9 oder 10, **dadurch gekennzeichnet, dass** die Vorrichtung (1, 20) eine maximale Höhe von weniger als 4,5 m aufweist.

12. Vorrichtung (1, 20) nach einem der Ansprüche 9-11, **dadurch gekennzeichnet, dass** die Mittel (7, 8; 11, 12) zum Erzeugen eines Luftstroms in mindestens einem der Trocknungsräume (6, 10, 27, 29) dazu ausgelegt sind, einen Luftstrom mit mindestens 3 m/s zu erzeugen.

## Revendications

1. Procédé de fabrication de produits alimentaires co-extrudés, comportant les étapes de traitement consistant à :
A) co-extruder un cordon allongé de pâte et un boyau enveloppant le cordon allongé de pâte pour former un produit alimentaire non coagulé,
B) mettre le boyau en contact avec une solution de sel, et
C) diviser le cordon alimentaire allongé gainé en produits individuels, et soumettre le produit alimentaire co-extrudé à des écoulements d'air, les conditions de processus desdits écoulements d'air successifs pouvant être régulées indépendamment les unes des autres pour définir des phases de séchage indépendantes et distinctes,
les produits alimentaires étant, après la division du cordon alimentaire allongé gainé en produits individuels, soumis à deux écoulements d'air successifs de séchage physiquement distincts l'un de l'autre tandis que les produits alimentaires ne sont pas encore entièrement coagulés après avoir traversé les écoulements d'air,
**caractérisé en ce que** la température initiale de l'écoulement d'air pendant au moins une des phases successives de séchage est d'au moins 95°C.

2. Procédé selon la revendication 1, **caractérisé en ce que** la vitesse d'écoulement d'au moins un des écoulements d'air est d'au moins 3 m/s.

3. Procédé selon l'une quelconque des revendications précédentes, **caractérisé en ce que** la température initiale de l'écoulement d'air pendant au moins une des phases successives atteint un maximum de 125°C, de préférence un maximum de 115°C.

4. Procédé selon l'une quelconque des revendications précédentes, **caractérisé en ce que** la température à coeur du cordon de pâte est inférieure à 60°C après avoir transité par chacune des phases de séchage.

5. Procédé selon l'une quelconque des revendications précédentes, **caractérisé en ce qu'**au moins un des écoulements d'air consiste en un écoulement d'air présentant une humidité de l'air inférieure à 25 grammes d'eau par kilogramme d'air.

6. Procédé selon l'une quelconque des revendications précédentes, **caractérisé en ce qu'**un traitement est effectué sur les produits alimentaires co-extrudés entre deux phases successives de séchage.

7. Procédé selon la revendication 6, **caractérisé en ce que** le traitement effectué entre deux phases successives de séchage est un traitement par liquide.

8. Procédé selon l'une quelconque des revendications précédentes, **caractérisé en ce que** les produits alimentaires co-extrudés sont chauffés après avoir transité par les deux phases successives de séchage de telle façon qu'ils soient entièrement coagulés.

9. Dispositif (1, 20) de fabrication de produits alimentaires co-extrudés, comportant :
- des moyens (2, 21, 22, 23) de co-extrusion servant à fabriquer simultanément un cordon allongé de pâte et un boyau enveloppant le cordon allongé de pâte,
- des moyens (3, 25) d'alimentation servant à amener une solution de sel jusqu'au produit alimentaire co-extrudé,
- des moyens (26) de séparation servant à diviser le produit alimentaire allongé gainé en produits individuels, et
- des moyens (6, 10, 27, 29) de séchage munis d'un moyen (7, 8 ; 11, 12) servant à générer un écoulement d'air disposé dans un espace (6, 10, 27, 29) de séchage,
les moyens (6, 10, 27, 29) de séchage situés derrière les moyens (26) de séparation comportant deux espaces de séchage mutuellement distincts, tous deux munis de moyens (7, 8 ; 11, 12) qui peuvent être régulés indépendamment les uns des autres pour générer des écoulements d'air indépendants,
**caractérisé en ce que** les moyens de séchage comportent un conduit d'écoulement au moins sensiblement horizontal servant au passage de l'écoulement d'air et **en ce que** les moyens de séchage sont capables de générer une température initiale de l'écoulement d'air pendant au moins une des phases successives de séchage d'au moins 95°C.

10. Dispositif (1, 20) selon la revendication 9, **caractérisé en ce que** les espaces (6, 10, 27, 29) de séchage distincts et les moyens respectifs (7, 8 ; 11, 12) servant à générer des écoulements d'air associés aux espaces (6, 10, 27, 29) de séchage sont assemblés en deux unités distinctes (6, 10, 27, 29).

11. Dispositif (1, 20) selon les revendications 9 ou 10, **caractérisé en ce que** le dispositif (1, 20) présente une hauteur maximale qui est inférieure à 4,5 mètres.

12. Dispositif (1, 20) selon l'une quelconque des revendications 9 à 11, **caractérisé en ce que** les moyens (7, 8 ; 11, 12) servant à générer un écoulement d'air dans au moins un des espaces de séchage (6, 10, 27, 29) sont prévus pour générer un écoulement d'air d'au moins 3 m/s.
